# EUROPEAN PATENT APPLICATION

(11) **EP 1 035 354 A2**
(43) Date of publication of application: **13.09.2000**
(21) Application number: 00104249.8
(22) Date of filing: 02.03.2000
(51) Int. Cl.: F16G 13/18

(54) **Chain-operated traction unit for drawing**

(30) Priority: 10.03.1999 IT UD990054
(71) Applicant: Coccolo Enzo, 34170 Gorizia (IT)
(72) Inventor: Coccolo Enzo, 34170 Gorizia (IT)
(74) Representative: Cragnolini, Sergio

(57) **Abstract**

A chain-operated traction unit for drawing, comprising a pair of chains (15, 16) which are arranged on opposite sides with respect to the product to be drawn (30), each being constituted by a plurality of elements (17) which are mutually concatenated so as to form a closed loop which has a substantially straight active portion, which is parallel to the drawing axis (13), and pusher means (46) which are suitable to push toward each other said active portions of said chains (15, 16) in order to impart to said product to be drawn (30) a given traction force, said chains (15, 16) lying on two planes which are substantially parallel to each other, being disposed on opposite sides with respect to said drawing axis (13), and being suitable to cooperate with the product to be drawn (30) by virtue of the opposite lateral surfaces (22) of said concatenated elements (17).

## Description

### TECHNICAL FIELD

The present invention relates to a chain-operated traction unit for drawing in which two chains cooperate, on opposite sides, with the product being processed in order to feed it with respect to the drawing die of the drawing machine.

More particularly, the invention relates to a traction unit in which the two chains are turned by a transmission element which is associated with a motor.

### BACKGROUND ART

Traction units for drawing are known in which multiple interchangeable clamps are mounted on two belts formed by means of corresponding chains which are arranged on a same plane which passes through the drawing axis. The chains are guided by appropriately provided guiding rollers, so as to form a substantially straight portion along which the clamps cooperate with the product to be drawn in order to move it with respect to the drawings die.

In these traction units, the product to be drawn is therefore affected by the external surface of the clamps, which lie mutually opposite in front of each other in respect to the straight portion of the belts.

The belts are moved by two corresponding driving sprockets whose rotation axes are mutually parallel and perpendicular to the plane on which the two belts lie.

Each sprocket is connected, by means of articulated adapters and a gear-type power divider, to a gear motor which is in turn connected to the shaft of a high-power electric motor which moves both belts.

These traction units also include guiding and pressing means which push the two belts toward each other in order to transmit, by means of the clamps, the traction force to the product to be drawn, which, as is known, can exceed 100 tons.

Said guiding and pressing means comprise auxiliary supporting chains, which are arranged internally and on the same path as the main belts, and a mechanism for the synchronized approach of the chain supporting assemblies for providing the pushing action for drawing.

Said known traction units, however, have the drawback that they are very bulky and complicated and accordingly very expensive.

The arrangement of the two belts on a same plane in fact causes the flat surface occupied by the two belts to be very large, since it is equal to the sum of the two surfaces occupied by each belt.

Furthermore, since the two driving sprockets are mutually axially offset, each sprocket requires a suitable kinematic chain which connects it to the motor shaft. It is in fact not feasible to connect each sprocket to an independent motor for reasons linked to practicality, cost, efficiency and control of the synchronization and speed of the motors.

Another drawback is constituted by the presence of the interchangeable clamps. On one hand, said clamps tend to leave marks on the product being processed, especially in the regions where the curved portions blend with the straight portion, and on the other hand they require a long time for their individual replacement during so-called profile changing.

The clamps are in fact shaped according to the diameter of the product to be drawn, and they must all be changed when it is necessary to process a product which requires clamps whose profile is different from that of the clamps already fitted on the belts.

In order to obviate these drawbacks, the Applicant has devised and provided the chain-operated traction unit for drawing according to the invention.

### SUMMARY OF THE INVENTION

The chain-operated traction unit for drawing according to the present invention is set forth and characterized in the main claim.

Other inventive aspects of the present invention are set forth in the dependent claims.

An object of the present invention is to provide a chain-operated traction unit for drawing which is simple and compact and at the same time ensures constant, precise and reliable feeding of the product being processed.

Another object of the present invention is to provide a chain-operated traction unit for drawing in which both chains are moved by a single actuator without interposing complicated motion transmission means.

In accordance with this object, the traction unit according to the invention comprises a pair of chains which are constituted by a plurality of elements which are mutually concatenated so as to form a closed loop which has a substantially straight portion which is suitable to cooperate, on opposite sides, with the product to be drawn in order to apply thereto a given traction force.

According to a characteristic of the invention, the two chains lie on two planes which are substantially parallel to each other, disposed on opposite sides with respect to the drawing axis, and are suitable to cooperate with the product to be drawn by virtue of the opposite lateral surfaces of the concatenated elements. In this manner, the interchangeable clamps are eliminated entirely, with undisputed economic advantages.

According to another characteristic of the invention, the two chains permanently cooperate with a single sprocket whose rotation axis is perpendicular to the two parallel planes on which the chains are arranged.

According to another characteristic of the invention, the distance between the internal planes on which the two chains lie is slightly greater than the diameter of the product being processed, and a pusher mechanism is provided in order to move the substantially straight portion of the two chains against the product being processed, in order to impart thereto the necessary traction force.

The concatenated elements are advantageously mutually engaged by means of articulated pivots, so that in the substantially straight or active portion said elements can move laterally with respect to the plane on which they are arranged, under the action of the pusher means, in order to move against the product being processed.

### BRIEF DESCRIPTION OF THE DRAWINGS

These and other characteristics of the present invention will become apparent from the following description of a preferred embodiment, given by way of a non-limitative example with the aid of the accompanying drawings, wherein:
Figure 1 is a view of a chain-operated traction unit for drawing according to the invention;
Figure 2 is a side view of the traction unit of Figure 1;
Figure 3 is an enlarged-scale view of a first detail of the traction unit of Figure 1;
Figure 4 is a sectional view, taken along the plane A-A of Figure 3;
Figure 5 is an enlarged-scale view of a second detail of the traction unit of Figure 1.

### DESCRIPTION OF A PREFERRED EMBODIMENT

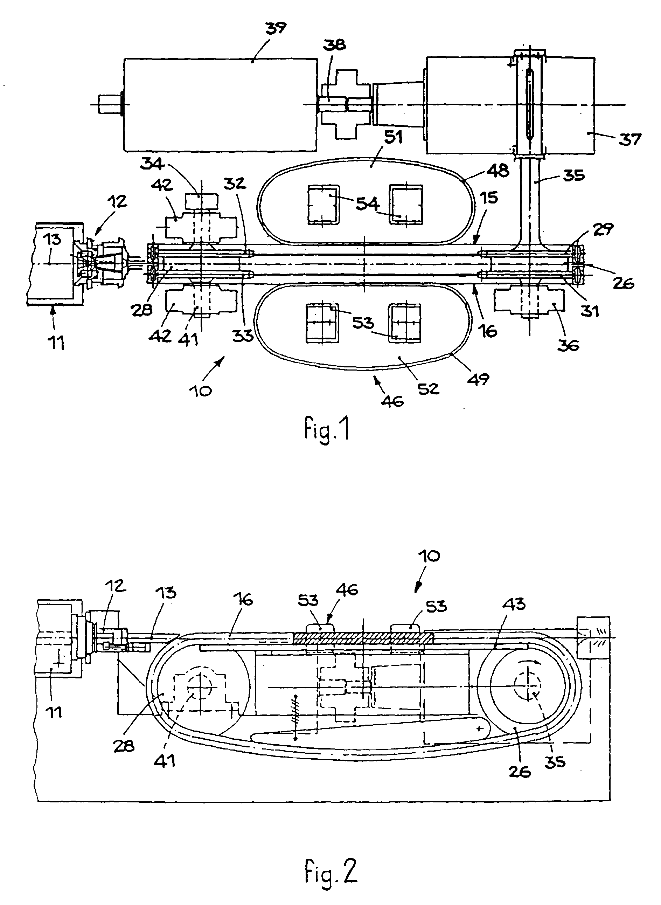

With reference to Figures 1 and 2, a traction unit 10 according to the invention is shown applied downstream of a drawing machine 11 of a known type, which has a drawing die 12 arranged on a drawing axis 13.

The traction unit 10 comprises two traction chains 15 and 16 which are arranged side by side and lie on substantially vertical planes which are mutually parallel and lie on opposite sides with respect to the drawing axis 13.

The distance between the two internal vertical planes on which the two chains 15 and 16 lie is slightly greater than the maximum diameter of the product 30 that the drawing machine 11 can process.

Each chain 15, 16 is constituted by metallic elements 17 which are mutually engaged so as to form a closed loop which has an active (or working) portion which is substantially straight and parallel to the drawing axis 13. Said loop can also be selectively opened, during the removal of each chain 15 and 16, for replacement thereof.

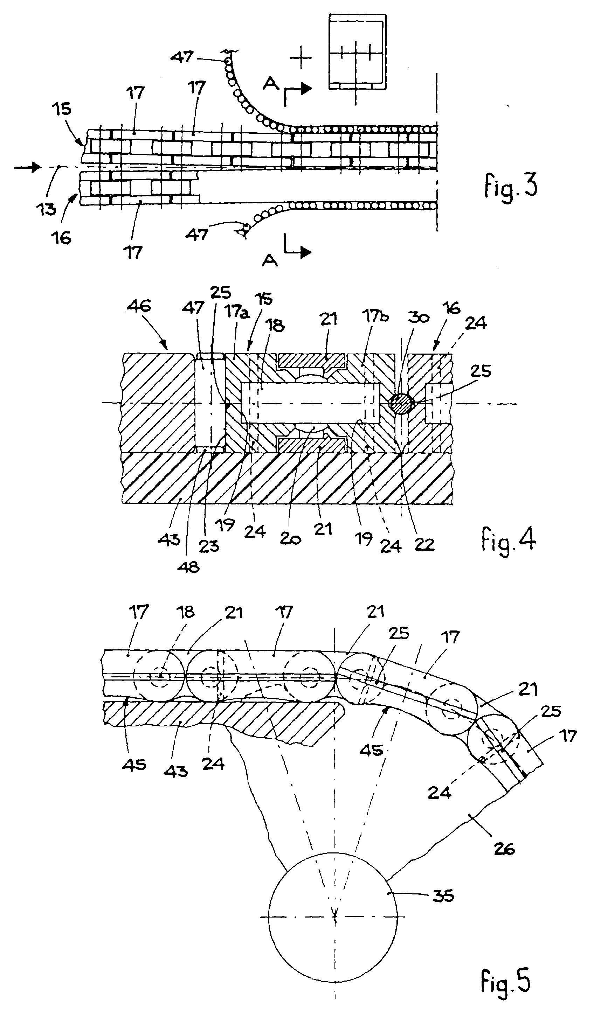

Each element 17 comprises two parts 17a and 17b which are mutually identical and are mutually coupled by virtue of transverse pivots 18 (Figures 3 and 4), are accommodated in suitable seats 19 and have, in their central part, a rounded element 20. An internal link 21 cooperates with the rounded elements 20 of the pivots 18 of two adjacent elements 17, mutually concatenating them and providing each chain 15 and 16. Suitable pins 24 fix the elements 17 to the pivots 18 (Figures 4 and 5).

Each element 17 has a substantially rectangular transverse cross-section (Figure 3) which forms two vertical lateral surfaces, an inner one 22 and an outer one 23, both of which have V-shaped longitudinal notches 25.

The depth of the notches 25 varies according to the diameter of the product 30 to be drawn. In particular, notches 25 which have a given depth are suitable to draw products 30 whose diameter falls within a given range of values.

According to a characteristic of the present invention, both chains 15 and 16 cooperate with a single driving sprocket 26 and a single driven sprocket 28.

The sprockets 26 and 28 each have two toothed wheels 29 and 31 and, respectively, 32 and 33 (Figure 1).

According to a variation, each sprocket 26 and 28 is provided with a single toothed wheel (not shown in the drawings) which is wide enough to cooperate with both chains 15 and 16.

The driving sprocket 26 is keyed on a horizontal shaft 35, one end of which is rotatably mounted on a fixed support 36, and connected to a reduction unit 37 which in turn is connected to the shaft 38 of a high-power motor 39.

The driven sprocket 28 is keyed on a horizontal axis 41 which is mounted so that it can rotate on fixed supports 42. A unidirectional device 34 is associated with the driven sprocket 28 and prevents it from rotating in reverse to the traction direction.

The elements 17, in the straight active portion, rest on a lower guide 43 which is substantially horizontal, so that in said portion the longitudinal notches 25 of the elements 17 are parallel to the drawing axis 13 and are symmetrical with respect to it.

The distance between the internal surfaces 22 of the two chains 15 and 16 at their non-straight portions is greater than the diameter of the product 30 to be moved and is smaller than said diameter in said straight portion.

The product 30 that leaves the drawing die 12 is in fact suitable to be accommodated between the longitudinal notches 25 of the inner lateral surfaces 22 of the elements 17 and to be clamped by them at the straight portion in order to be drawn at the same advancement speed as the chains 15 and 16.

The elements 17 of the chains 15 and 16 are therefore suitable to move laterally, on the horizontal guide 43, in respect to the straight portion, by virtue of their embodiment and of the particular type of engagement that joins them to each other.

The elements 17 and 21 are also shaped so as to have an arc-like lower profile 45 (Figure 5), so that there are no sudden changes in direction in the transition from the straight portion to the arc-like portions at the sprockets 26 and 28.

The traction unit 10 furthermore comprises a pusher mechanism 46 (Figures 1 and 2) for pushing the elements 17 of the chains 15 and 16, which are dynamically located at the straight active portion, toward the drawing axis 13.

The pusher mechanism 46 comprises a plurality of rollers 47 (Figure 3) which are mounted so that they can rotate, with their rotation axes arranged vertically, on two auxiliary chains 48 and 49 which are supported so that they can rotate on guides 51 and 52, respectively, which lie on a same horizontal plane, i.e., at right angles to the planes on which the chains 15 and 16 lie.

Two pairs of hydraulic cylinders 53 and 54 are provided in order to cooperate with the guides 51 and 52, respectively, and push them toward each other.

In this manner, the elements 17 of the two chains 15 and 16 are also pushed toward each other, at the straight portion, clamping the product 30 to be drawn between them.

The direction of the force applied by the pusher mechanism 46 is therefore substantially perpendicular to the parallel planes on which the chains 15 and 16 lie.

With the traction unit 10 described so far, it is also very quick and easy to replace the chains 15 and 16, for example if it is necessary to change, with the drawing machine 11, from a product 30 which has a diameter that lies within a certain range, associable with notches 25 having a certain depth, to a product 30 whose diameter is not within such range.

It is in fact sufficient to approach, for example from above, with a new chain which hangs from a crane on a free wheel, disengage two adjacent elements 17 and engage them to the new chain which hangs from the crane. The motor 39 is then turned at low speed until the new chain engages the sprockets 26 and 28. The chains 15, 16 to be replaced are disconnected and the elements 17 of the new chain are mutually reconnected.

It is evident that the chain-operated traction unit 10 for drawing described so far can be subjected to modifications and additions of parts without thereby abandoning the scope of the present invention.

## Claims

1. A chain-operated traction unit for drawing, comprising a pair of chains (15, 16) which are arranged on opposite sides with respect to the product to be drawn (30), each chain being constituted by a plurality of elements (17) which are mutually concatenated so as to form a closed loop which has a substantially straight active portion, which is parallel to the drawing axis (13), and pusher means (46) which are suitable to push toward each other said active portions of said chains (15, 16) in order to impart to said product to be drawn (30) a given traction force, characterized in that said chains (15, 16) lie on two planes which are substantially parallel to each other, are disposed on opposite sides with respect to said drawing axis (13), and are suitable to cooperate with the product to be drawn (30) by virtue of the opposite lateral surfaces (22) of said concatenated elements (17).

2. The traction unit according to claim 1, characterized in that said chains (15, 16) are turned simultaneously by a single driving sprocket (26) whose rotation axis is perpendicular to said two parallel planes on which said chains (15, 16) lie.

3. The traction unit according to claim 2, characterized in that there is a single driven sprocket (28) which cooperates with both of said chains (15, 16) and whose rotation axis is parallel to the rotation axis of said driving sprocket (26).

4. The traction unit according to claim 2, characterized in that at least said driving sprocket (26) is provided with two toothed wheels (29 and 31), each of which is suitable to mesh with one of said chains (15, 16).

5. The traction unit according to claim 2, characterized in that at least said driving sprocket (26) is provided with a single toothed wheel which is wide enough to cooperate with both of said chains (15, 16).

6. The traction unit according to claim 3, characterized in that said concatenated elements (17) each have an arc-like lower profile (45), so that there are no sudden changes in direction in passing from said straight portion to arc-like portions, at said sprockets (26, 28).

7. The traction unit according to claim 1, characterized in that the distance between the planes on which the inner surfaces (22) of said chains (15, 16) lie is slightly greater than the maximum diameter of the product to be moved (30).

8. The traction unit according to claim 1, characterized in that said pusher means (46) are suitable to move toward said drawing axis (13) the active portion of each one of said chains (15, 16) in order to move said concatenated elements (17) against the product to be drawn (30) in order to apply thereto the necessary traction force.

9. The traction unit according to claim 1, characterized in that said concatenated elements (17) are mutually engaged by means of articulated pivots (18), so that in said active portion said concatenated elements (17) can move laterally with respect to the plane on which the corresponding chain (15, 16) lies under the action of said pusher means, the direction of the force applied by said pusher means (46) being substantially perpendicular to said parallel planes.

10. The traction unit according to claim 1, characterized in that each one of said concatenated elements (17) comprises two parts (17a, 17b) which are identical and are mutually coupled by virtue of transverse pivots (18) which are provided with a rounded element (20) in their central part.

11. The traction unit according to claim 1, characterized in that each one of said concatenated elements (17) comprises at least one first lateral surface (22) which is parallel to said planes, and in that longitudinal notches (25) are formed in said first lateral surface (22).

12. The traction unit according to claim 11, characterized in that each one of said concatenated elements (17) also comprises a second lateral surface (23) which is parallel to said first lateral surface (22), and in that longitudinal notches (25) are also formed in said second lateral surface (23).

13. The traction unit according to claim 11, characterized in that a lower guide (43), which is parallel to said drawing axis (13), is provided at the active portion of each one of said chains (15, 16) in order to guide said concatenated elements (17).

14. The traction unit according to claim 1, characterized in that said pusher means (46) comprise a plurality of rollers (47) which are rotatably mounted on two auxiliary chains (48, 49) which are in turn rotatably mounted on guides (51, 52) which lie on a same plane which is perpendicular to said planes on which said chains (15, 16) lie.

15. The chain-operated traction unit for drawing, substantially as described, with reference to the accompanying drawings.
